# EUROPEAN PATENT APPLICATION

(11) **EP 4 318 749 A1**
(43) Date of publication of application: **07.02.2024**
(21) Application number: 21933648.4
(22) Date of filing: 30.03.2021
(51) Int. Cl.: H01M 50/179, H01M 50/186

(54) **BATTERY CELL AND ELECTRICAL DEVICE**

(71) Applicant: Ningde Amperex Technology Limited, Ningde, Fujian 352100 (CN)
(72) Inventor: ZHI, Ying, Ningde, Fujian 352100 (CN)
(74) Representative: Klunker IP Patentanwälte PartG mbB
(86) International application number: PCT/CN2021/084059
(87) International publication number: WO 2022/204966

(57) **Abstract**

An packaging bag comprising a main body and an edge sealing portion, the electrode assembly and the inner electrode tab being received in the main body, a first end of the inner electrode tab being connected to the electrode assembly, and a second end of the inner electrode tab being connected to one end of the outer electrode tab, wherein the edge sealing portion is connected to a top wall of the main body, the other end of the outer electrode tab extends out of the packaging bag from the edge sealing portion, and the top wall comprises a first portion and a second portion disposed on both sides of the edge sealing portion in the thickness direction of the cell, wherein a first height from the first portion to the bottom wall of the main body is less than a second height from the second portion to the bottom wall of the main body.

## Description

### TECHNICAL FIELD

Embodiments of the present application relate to the field of battery technology, and particularly to a cell, and an electrical device.

### BACKGROUND

A cell is a device that converts external energy into electrical energy and stores it within the cell to supply the electrical energy to an external electrical device (e.g., a portable electronic device, etc.) when needed. Currently, the cell is widely used in electrical devices such as camera drones, cell phones, tablets, laptops, and the like. Generally, the cell includes an electrode assembly, a packaging bag, an inner electrode tab, and an outer electrode tab, the packaging bag includes a main body, the electrode assembly and the inner electrode tab are received in the main body, a first end of the inner electrode tab is connected to the electrode assembly, and a second end of the inner electrode tab is connected to the outer electrode tab.

In the implementation process of the present application, the applicant recognizes: at present, because the electrode assemblies are connected by the inner electrode tab and outer electrode tab, and a certain receiving space is occupied by the inner electrode tab, and the connection of the inner electrode tab and outer electrode tab, the cell has a relatively large size and thereby less adaptive to electrical devices, limiting the application range of the cell.

### SUMMARY

Embodiments of the present application are intended to provide a cell, and an electrical device to solve the problem in the prior art that the cell has a relatively large size because a certain receiving space is occupied by the inner electrode tab, and the connection of the inner electrode tab and outer electrode tab.

According to one aspect of an embodiment of the present application, a cell is provided, including an electrode assembly, a packaging bag, an inner electrode tab, and an outer electrode tab, the packaging bag includes a main body and an edge sealing portion, the electrode assembly and the inner electrode tab are received in the main body, a first end of the inner electrode tab is connected to the electrode assembly, a second end of the inner electrode tab is connected to one end of the outer electrode tab, the edge sealing portion is connected to a top wall of the main body, the other end of the outer electrode tab extends out of the packaging bag from the edge sealing portion, and the top wall includes a first portion and a second portion disposed at both sides of the edge sealing portion in the thickness direction of the cell, wherein a first height from the first portion to the bottom wall of the main body is less than a second height from the second portion to the bottom wall of the main body. By setting at least a portion of the inner electrode tab and the connection of the inner electrode tab and outer electrode tab to correspond to the second portion, the cell has a small overall size, so that an external electrical device may use the space left between the second portion and first portion outside of the packaging bag of the cell, thereby expanding the application range of the cell.

According to an embodiment, the outer electrode tab includes a connection portion and a protrusion portion bent from the connection portion to extend out of the edge sealing portion, the connection portion corresponds to the second portion, the second end of the inner electrode tab is extended toward the second portion and is bent in the direction of the first portion in proximity to the second portion, and the second end of the inner electrode tab is connected to the connection portion after bending. The inner electrode tab is connected to the outer electrode tab by the connection portion of the outer electrode tab, and the connection portion corresponds to the second portion, and thus the cell has a small overall size.

According to an embodiment, the electrode assembly includes first electrode plates, second electrode plates, and separators, the separators are located between the first electrode plates and the second electrode plates, and the first electrode plates, separators, and second electrode plates are wound together to form a winding structure; the inner electrode tab includes a plurality of first inner electrode tabs, and a plurality of second inner electrode tabs, and the outer electrode tab includes a first outer electrode tab and a second outer electrode tab; first ends of the plurality of first inner electrode tabs are connected to the first electrode plates, and second ends of the plurality of first inner electrode tabs are connected to the first outer electrode tab; and first ends of the plurality of second inner electrode tabs are connected to the second electrode plates, second ends of the plurality of second inner electrode tabs are connected to the second outer electrode tab, and the second outer electrode tab extends out of the packaging bag from the edge sealing portion. By providing the plurality of first inner electrode tabs and the plurality of second inner electrode tabs, the cell has high charging and discharging performance.

According to an embodiment, each circle of the first electrode plates is connected to a first end of one of the first inner electrode tabs, the connection points where the first electrode plates are connected to each of the first inner electrode tabs are in the same semicircle of the winding structure, and the connection points where the first electrode plates are connected to each of the first inner electrode tabs correspond to the second portion; and/or each circle of the second electrode plates is connected to a first end of one of the second inner electrode tabs, the connection points where the second electrode plates are connected to each of the second inner electrode tabs are in the same semicircle of the winding structure, and the connection points where the second electrode plates are connected to each of the second inner electrode tabs correspond to the second portion. In the electrode assembly of the winding structure, by providing the plurality of first inner electrode tabs and the plurality of second inner electrode tabs in the same semicircle, it has a large difference between the second height corresponding to the second portion and the first height corresponding to the first portion, so that a large space is left between the second portion and the first portion outside of the packaging bag of the cell.

According to an embodiment, the difference between the second height and the first height is 0.6 mm to 1.2 mm.

According to an embodiment, the difference between the second height and the first height is 0.8 mm to 1.0 mm.

According to an embodiment, the difference between the second height and the first height is 0.9 mm.

According to an embodiment, each half-circle of the first electrode plate is connected to the first end of one of the first inner electrode tabs, and the two connection points where each circle of the first electrode plates is connected to the first inner electrode tab are distributed in two semicircles of the winding structure, respectively, wherein one semicircle of the winding structure is opposite to the first portion, and the other semicircle of the winding structure is opposite to the second portion; and each circle of the second electrode plate is connected to the first end of one of the second inner electrode tabs, and the connection points where the second electrode plate is connected to each of the second inner electrode tabs are distributed within the same semicircle of the winding structure. In the electrode assembly of the winding structure, even if the plurality of first inner electrode tabs are distributed in the two semicircles of the winding structure, the first height corresponding to the first portion would still be smaller than the second height corresponding to the second portion since the connection portions connecting the inner electrode tab to the outer electrode tab correspond to the second portion, so that a certain space may still be left between the second portion and the first portion outside of the packaging bag of the cell.

According to an embodiment, each circle of the first electrode plate is connected to the first end of one of the first inner electrode tabs, and the connection points where the first electrode plate is connected to each of the first inner electrode tabs are distributed within the same semicircle of the winding structure. Each half-circle of the second electrode plate is connected to the first end of one of the second inner electrode tabs, and the two connection points where each circle of the second electrode plate is connected to the second inner electrode tab are distributed within two semicircles of the winding structure, respectively, wherein one semicircle of the winding structure is opposite to the first portion, and the other semicircle of the winding structure is opposite to the second portion. In the electrode assembly of the winding structure, even if the plurality of second inner electrode tabs are distributed in the two semicircles of the winding structure, the first height corresponding to the first portion would still be smaller than the second height corresponding to the second portion because the connection portion connecting the inner electrode tab to the outer electrode tab corresponds to the second portion, so that a certain space may still be left between the second portion and the first portion outside of the packaging bag of the cell.

According to an embodiment, each half-circle of the first electrode plate is connected to the first end of one of the first inner electrode tabs, and the two connection points where each circle of the first electrode plate is connected to the first inner electrode tab are distributed within two semicircles of the winding structure, respectively; and each half-circle of the second electrode plate is connected to the first end of one of the second inner electrode tabs, and the two connection points where each circle of the second electrode plate is connected to the second inner electrode tab are distributed within two semicircles of the winding structure, respectively; wherein one semicircle of the winding structure is opposite to the first portion, and the other semicircle of the winding structure is opposite to the second portion. In the electrode assembly of the winding structure, even if the plurality of first inner electrodes are distributed in the two semicircles of the winding structure and the plurality of second inner electrodes are distributed in the two semicircles of the winding structure, the first height corresponding to the first portion would still be smaller than the second height corresponding to the second portion because the connection portion connecting the inner electrode tab to the outer electrode tab corresponds to the second portion, so that a certain space may still be left between the second portion and the first portion outside of the packaging bag of the cell.

According to an embodiment, the difference between the second height and the first height is 0.2 mm to 0.8 mm.

According to an embodiment, the difference between the second height and the first height is 0.4 mm to 0.6 mm.

According to an embodiment, the difference between the second height and the first height is 0.5 mm.

According to an embodiment, the cell further includes a plurality of first insulating tapes and a plurality of second insulating tapes; two ends of one of the first insulating tapes are attached to one surface of the first end of one of the first inner electrode tabs and a surface of a material layer of the first electrode plate, respectively; and/or two ends of one of the second insulating tapes are attached to one surface of the first end of one of the second inner electrode tabs and a surface of a material layer of the second electrode plate, respectively. By providing the first insulating tape and second insulating tape, a short-circuit phenomenon between the first electrode plate and the second electrode plate can be inhibited.

According to an embodiment, the cell further includes a first electrode tab tape and a second electrode tab tape; the first electrode tab tape is used to seal the connection of the first outer electrode tab and edge sealing portion, and the second electrode tab tape is used to seal the connection of the second outer electrode tab and edge sealing portion. By providing the first electrode tab tape and second electrode tab tape, the cell is not prone to liquid leakage at the connection of the outer electrode tab and the packaging bag.

According to another aspect of embodiments of the present application, an electrical device is provided, which includes a load and any one of the above-described cells, and the load and the cell are electrically connected.

The beneficial effect of the embodiments of the present application is to provide a cell, and an electrical device, wherein the cell includes an electrode assembly, a packaging bag, an inner electrode tab, and an outer electrode tab, the packaging bag includes a main body and an edge sealing portion, and the top wall of the main body includes a first portion and a second portion disposed at both sides of the edge sealing portion in the thickness direction of the cell, wherein a first height from the first portion to the bottom wall of the main body is less than a second height from the second portion to the bottom wall of the main body. By setting at least a portion of the inner electrode tab and the connection of the inner electrode tab and outer electrode tab to correspond to the second portion, the cell has a small overall size, so that an external electrical device may use the space left between the second portion and first portion outside of the packaging bag of the cell, thereby expanding the application range of the cell.

### BRIEF DESCRIPTION OF DRAWINGS

One or more embodiments are described exemplarily by pictures in the figures corresponding to the embodiments. This exemplary description is not intended to limit the embodiments. Elements having the same reference number in the figures are indicated as similar elements. The views in the figures are not drawn to scale, unless specifically indicated.
FIG. 1 is a sectional view in one direction of a cell provided by embodiments of the present application;
FIG. 2 is an alternative representation of a sectional view in one direction of a cell provided by embodiments of the present application;
FIG. 3 is a sectional view of one way of connecting an electrode assembly of a winding structure and an inner electrode tab provided by embodiments of the present application;
FIG. 4 is another representation of a sectional view in one direction of a cell provided by embodiments of the present application;
FIG. 5 is another representation of a sectional view in one direction of a cell provided by embodiments of the present application;
FIG. 6 is another representation of a sectional view in one direction of a cell provided by embodiments of the present application;
FIG. 7 is a sectional view of another way of connecting an electrode assembly of a winding structure and an inner electrode tab provided by embodiments of the present application;
FIG. 8 is a sectional view of another way of connecting an electrode assembly of a winding structure and an inner electrode tab provided by embodiments of the present application;
FIG. 9 is a sectional view of another way of connecting an electrode assembly of a winding structure and an inner electrode tab provided by embodiments of the present application; and
FIG. 10 is a sectional view of another way of connecting an electrode assembly of a winding structure and an inner electrode tab provided by embodiments of the present application.

### DETAILED DESCRIPTION OF EMBODIMENTS

The technical solutions in the embodiments of the present application are described in detail below in combination with the figures in the embodiments in order to better understand the purpose, technical solutions and advantages of the embodiments. Obviously, described embodiments are a part of the embodiments of the present application. It should be understood that specific embodiments described herein are used to explain the present application and are not intended to limit it. Based on the embodiments of the present application, other embodiments obtained by a person of ordinary skill in the art without inventive effort are within the scope of protection of the application.

As a note, when an element is "fixed to" another one, the element may be directly on another element, or there may be one or more intermediate elements therebetween. When an element is "connected" to another one, it may be directly connected to another element, or there may be one or more intermediate elements therebetween. The terms "vertical," "horizontal," "left," "right," and the like used herein are for illustrative purposes only.

Furthermore, the technical features involved in the embodiments of the present application described below may be combined with each other if they are not contradictory.

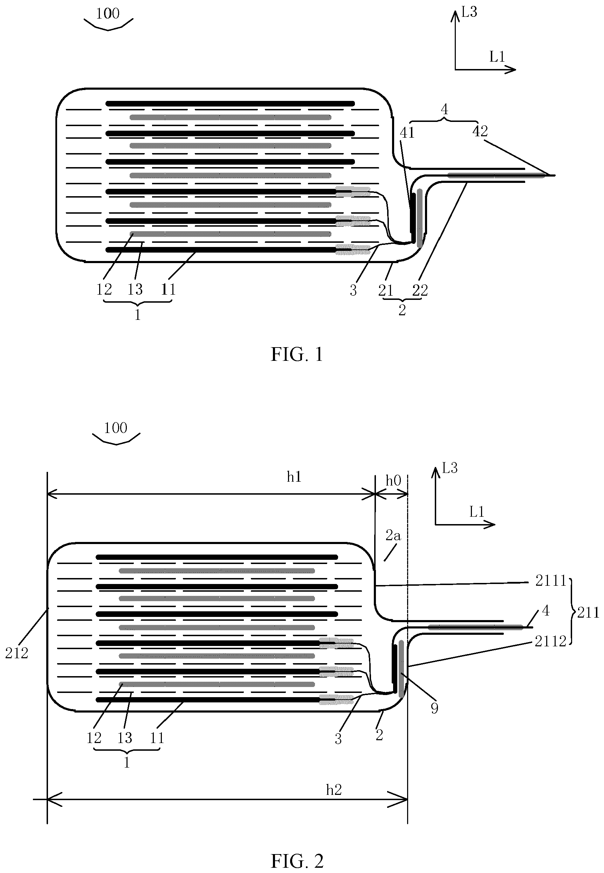

Referring to FIGS. 1 and 2, a cell 100 includes an electrode assembly 1, a packaging bag 2, an inner electrode tab 3, and an outer electrode tab 4, the packaging bag 2 includes a main body 21 and an edge sealing portion 22, the electrode assembly 1 is received in the main body 21, the inner electrode tab 3 is connected to the electrode assembly 1 and the outer electrode tab 4, and the edge sealing portion 22 is connected to a top wall 211 of the main body 21, the outer electrode tab 4 extends out of the packaging bag 2 from the edge sealing portion 22, and in a thickness direction L3 of the cell 100, the top wall 211 includes a first portion 2111 and a second portion 2112 at both sides of the edge sealing portion 22, wherein a first height h1 from the first portion 2111 to the bottom wall 212 of the main body 21 is smaller than a second height h2 from the second portion 2112 to the bottom wall 212 of the main body 21. By at least setting the inner electrode tabs 3, and the connection of the inner electrode tab 3 and outer electrode tab 4 to correspond to the second portion 2112, the cell 100 has a small overall size, so that an external electrical device may use the space 2a left between the second portion 2112 and first portion 2111 outside of the packaging bag 2 of the cell 100, thereby expanding the application range of the cell 100.

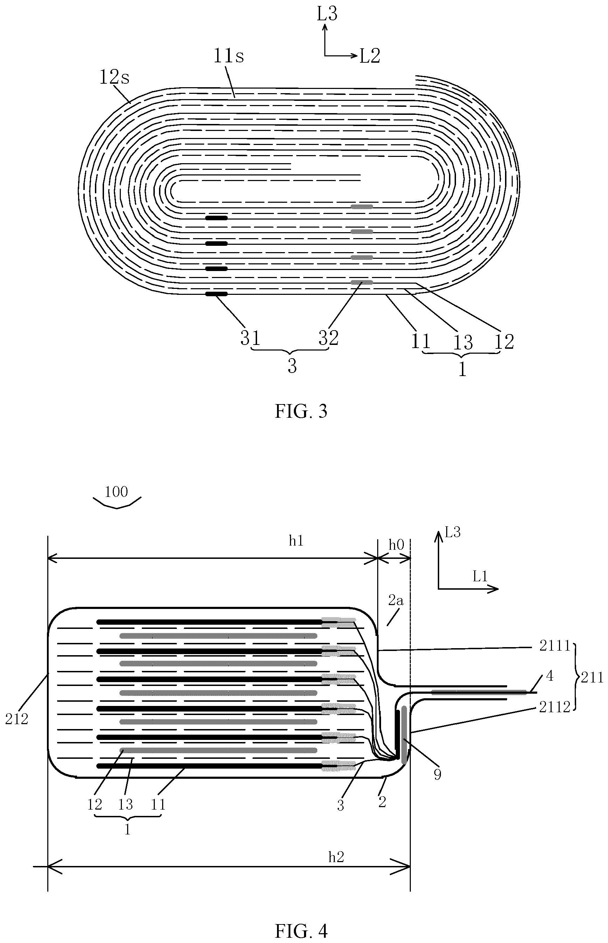

For the electrode assembly 1 described above, referring to FIG. 3, in some embodiments, the electrode assembly 1 includes a first electrode plate 11, a second electrode plate 12, and a separator 13, the separator 13 is disposed between the first electrode plate 11 and the second electrode plate 12, and the first electrode plate 11, the separator 13, and the second electrode plate 12 are wound together to form a winding structure.

Here, the first electrode plate 11 is a positive electrode plate and the second electrode plate 12 is a negative electrode plate, or wherein the first electrode plate 11 is a negative electrode plate and the second electrode plate 12 is a positive electrode plate.

The winding structure has a flat portion 11s and a bent portion 12s, wherein the flat portion 11s is a portion where the first electrode plate 11, the separator 13, or the second electrode plate 12 that extend straightly, and the bent portion 12s is a portion where the first electrode plate 11, the separator 13, or the second electrode plate 12 that bend toward the flat portion 11s. In the embodiment of the present application, a first direction L1 is set as the direction in which the outer electrode tab 4 extends out of the packaging bag 2 from the edge sealing portion 22, a second direction L2 is set as the direction in which the curved portion 12s bends toward the flat portion 11s, and the thickness direction L3 of the cell 100 is set as the direction perpendicular to the first direction L1 and second direction L2, respectively.

For the above-described electrode assembly 1, in some embodiments, referring to FIG. 1, the electrode assembly 1 includes a first electrode plate 11, a second electrode plate 12, and a separator 13, the separator 13 is disposed between the first electrode plate 11 and the second electrode plate 12, and the first electrode plate 11, the separator 13, and the second electrode plate 12 are stacked sequentially to form a stacked sheet structure.

For the above-described stacked sheet structure, a first direction L1 is set as the direction in which the outer electrode tab 4 extends out of the packaging bag 2 from the edge sealing portion 22, and the thickness direction L3 of the cell 100 is set as the direction in which the first electrode plate 11, the separator 13, and the second electrode plate 12 are stacked.

For the above-described packaging bag 2, referring to FIGS. 1 and 2, the packaging bag 2 includes a main body 21 and an edge sealing portion 22, wherein the main body 21 has a top wall 211 and a bottom wall 212, wherein the top wall 211 and the bottom wall 212 are provided opposite to each other. The edge sealing portion 22 is connected to the top wall 211. The edge sealing portion 22 is used for the outer electrode tab 4 to extend out of the packaging bag 2 from the inside of the packaging bag 2.

The edge sealing portion 22 includes a first portion 2111 and a second portion 2112. The first portion 2111 and the second portion 2112 are disposed at both sides of the edge sealing portion 22 in the thickness direction L3 of the cell 100. Here, a first height h1 from the first portion 2111 to the bottom wall 212 of the main body 21 is smaller than a second height h2 from the second portion 2112 to the bottom wall 212 of the main body 21. That is, in the above-described first direction L1, for the main body 21 of the packaging bag 2, the size of the area where the first portion 2111 is located are smaller than the size of the area where the second portion 2112 is located.

In the prior art, the first height h1 and the second height h2 are the same, the inner electrode tab 3 is distributed in the first portion 2111 and the second portion 2112, the connection of the inner electrode tab 3 and the outer electrode tab 4 is in the area corresponding to the second portion 2112, and the gap is left between the first portion 2111 and the electrode assembly 1 within the packaging bag 2.

In the embodiment of the present application, at least a portion of the inner electrode tab 3, and the connection of the inner electrode tab 3 and the outer electrode tab 4 may be arranged in the region corresponding to the second portion 2112, and the first height h1 corresponding to the first portion 2111 is smaller than the height corresponding to the second portion 2112, so as to realize the arrangement of the inner electrode tabs 3, and the overall sizes of the cell 100 is not increased due to the arrangement of the plurality of inner electrode tabs 3. And an external electrical device may use the space 2a left between the second portion 2112 and the first portion 2111 in the cell 100 outside of the packaging bag 2.

As a note, in some embodiments, when the number of inner electrode tabs 3 are multiple, referring to FIG. 4, it is also possible to arrange some of the inner electrode tabs 3 in the region corresponding to the second portion 2112, the remaining inner electrode tabs 3 are arranged in the region corresponding to the first portion 2111, and the connections of the inner electrode tabs 3 and the outer electrode tabs 4 are arranged in the region corresponding to the second portion 2112, so that it is also possible to realize the arrangement of a plurality of inner electrode tabs 3. However, since the first height h1 corresponding to the first portion 2111 of the packaging bag 2 is smaller than the second height h2 corresponding to the second portion 2112, the cell 100 has a small overall size.

As a note, in some embodiments, the difference h0 between the second height h2 and first height h1 is 0.6 mm to 1.2 mm. In some embodiments, the difference h0 is 0.8 mm to 1.0 mm. In some embodiments, h0 is preferably 0.9 mm.

Alternatively, in other embodiments, the difference h0 between the second height h2 and first height h1 is 0.2 mm to 0.8 mm. In other embodiments, the difference h0 is 0.4 mm to 0.6 mm. In yet other embodiments, h0 is preferably 0.5 mm.

For the above-described inner electrode tab 3 and outer electrode tab 4, referring to FIGS. 1 and 2, a first end of the inner electrode tab 3 is connected to the electrode assembly 1, a second end of the inner electrode tab 3 is connected to one end of the outer electrode tab 4, and the other end of the outer electrode tab 4 extends out of the packaging bag 2 from the edge sealing portion 22 thereof.

As a note, in some embodiments, the inner electrode tab 3 is integrated with the electrode assembly 1, or, the inner electrode tab 3 is welded to the electrode assembly 1.

As a note, in some embodiments, the inner electrode tab 3 is integrated with the outer electrode tab 4, or, the inner electrode tab 3 is welded to the outer electrode tab 4.

As a note, in some embodiments, the inner electrode tab 3 is integrated with the electrode assembly 1, and the inner electrode tab 3 is integrated with the outer electrode tab 4.

As a note, in some embodiments, the inner electrode tab 3 is welded to the electrode assembly 1, and the inner electrode tab 3 is welded to the outer electrode tab 4.

In some embodiments, the outer electrode tab 4 includes a connection portion 41 and a protrusion portion 42, wherein the connection portion 41 corresponds to the second portion 2112, and is used to be connected to the second end of the inner electrode tab 3. The protrusion portion 42 is obtained by bending and extending from the connection portion 41, and extends out of the edge sealing portion 22. The second end of the outer electrode tab 4 extends toward the second portion 2112 and is bent in the direction of the first portion 2111 in proximity to the second portion 2112. The second end of the inner electrode tab 3 is bent towards the first portion 2111 and then connected to the connection portion 41.

As a note, when the number of inner electrode tabs 3 is multiple, second ends of the plurality of inner electrode tabs 3 are each connected to the connection portion 41 of the outer electrode tab 4.

It is worthy of note that the cell 100 usually has two types of inner electrode tabs 3, wherein one type of the inner electrode tab 3 and the outer electrode tab 4 connected thereto are equivalent to the positive electrode of the cell 100, and the other type of the inner electrode tab 3 and the outer electrode tab 4 connected thereto are equivalent to the negative electrode of the cell 100.

Understandably, in some embodiments, referring to FIGS. 3, 5, and 6, the inner electrode tabs 3 include a plurality of first inner electrode tabs 31 and a plurality of second inner electrode tab 32, and the outer electrode tab 4 include a first outer electrode tab 41s and a second outer electrode tab 42s; first ends of the plurality of first inner electrode tabs 31 are connected to the first electrode plate 11, and second ends of the plurality of first inner electrode tabs 31 are connected to the first outer electrode tab 41s; and first ends of the plurality of second electrode tabs 32 are connected to the second electrode plate 12, second ends of the plurality of second electrode tabs 32 are connected to the second outer electrode tab 42s, and the second outer electrode tab 42s extends out of the packaging bag 2 from the edge sealing portion 22.

Understandably, in some embodiments, the plurality of first inner electrode tabs 31 are integrated with the first electrode plate 11, or, the plurality of first inner electrode tabs 31 are welded to the first electrode plate 11.

Understandably, in some embodiments, the plurality of second electrode tabs 32 are integrated with the second electrode plate 12, or, the plurality of second electrode tabs 32 are welded to the second electrode plate 12.

Understandably, each of the first outer electrode tab 41s and the second outer electrode tab 42s has a connection portion 41 and a protrusion portion 42. The connection portion 41 of the first outer electrode tab 41s is used for connection with the second end of the first inner electrode tab 31, and the protrusion portion 42 of the first outer electrode tab 41s extends out of the packaging bag 2 from the edge sealing portion 22. The connection portion 41 of the second outer electrode tab 42s is used for connection with the second end of the second inner electrode tab 32, and the protrusion portion 42 of the second outer electrode tab 42s extends out of the packaging bag 2 from the edge sealing portion 22. Here, the connection portion 41 of the first outer electrode tab 41s corresponds to the second portion 2112, and the connection portion 41 of the second outer electrode tab 42s corresponds to the second portion 2112.

Referring to FIG. 3 for the above-described inner electrode tab 3, outer electrode tab 4, and the electrode assembly 1 of the winding structure, in some embodiments, they form a semi-electrode tab structure, in which each circle of the first electrode plate 11 is connected to the first end of the first inner electrode tab 31, the connection points where the first electrode plates 11 are connected to each of the first inner electrode tabs 31 are located in the same semicircle of the winding structure, and the connection points where the first electrode plates 11 are connected to each of first inner electrode tabs 31 correspond to the second portion 2112; and/or, each circle of the second electrode plate 12 is connected to a first end of one of the second inner electrode tabs 32, the connection points where the second electrode plates 12 are connected to each of the second inner electrode tabs 32 are located in the same semicircle of the winding structure, and the connection points where the second electrode plates 12 are connected to each of the second inner electrode tabs 32 correspond to the second portion 2112. Here, the connection points where each of first inner electrode tabs 31 is connected to the first outer electrode tab 41s correspond to the second portion 2112. Here, the connection point where each of the second inner electrode tabs 32 is connected to the second outer electrode tab 42s corresponds to the second portion 2112.

As a note, in the semi-electrode tab structure, the difference h0 between the second height h2 from the second portion 2112 to the bottom wall 212 of the main body 21 and the first height h1 from the first portion 2111 to the bottom wall 212 of the main body 21 is 0.6 mm to 1.2 mm.

Preferably, in the semi-electrode tab structure, the difference h0 between the second height h2 from the second portion 2112 to the bottom wall 212 of the main body 21 and the first height h1 from the first portion 2111 to the bottom wall 212 of the main body 21 is 0.8 mm to 1.0 mm.

More preferably, in the semi-electrode tab structure, the difference h0 between the second height h2 from the second portion 2112 to the bottom wall 212 of the main body 21 and the first height h1 from the first portion 2111 to the bottom wall 212 of the main body 21 is 0.9 mm.

Here, the "semicircle" in embodiments of the present application is described with respect to the structure shown when the electrode assembly 1 of the winding structure is segmented in cross section, wherein the cross section refers to the plane where the second direction L2 and the thickness direction of the cell 100 are located.

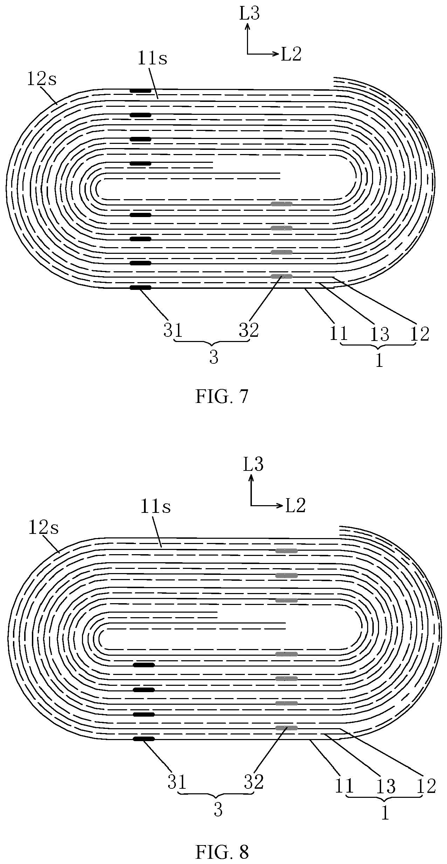

Referring to FIG. 7 for the above-described inner electrode tab 3, outer electrode tab 4, and electrode assembly 1 of the winding structure, in some embodiments, they form a half-entire electrode tab structure, one way of realizing which is the following: each half-circle of the first electrode plate 11 is connected to a first end of one of the first inner electrode tabs 31, and the two connection points where the first electrode plate 11 is connected to the first inner electrode tab 31 are distributed within two semicircles of the winding structure, respectively, wherein one semicircle of the winding structure is opposite the first portion 2111, and the other semicircle of the winding structure corresponds to the second portion 2112; and each circle of the second electrode plate 12 is connected to a first end of one of the second inner electrode tab 32, and the connection points where the second electrode plates 12 are connected to the second inner electrode tabs 32 are all distributed within the same semicircle of the winding structure. Here, the connection point where each of first inner electrode tabs 31 is connected to the first outer electrode tab 41s corresponds to the second portion 2112. Here, the connection point where each of the second inner electrode tabs 32 is connected to the second outer electrode tab 42s corresponds to the second portion 2112.

Referring to FIG. 8 for the above-described inner electrode tabs 3, outer electrode tabs 4, and electrode assembly 1 of the winding structure, in some embodiments, they form a half-entire electrode tab structure, another way of realizing which is the following: each circle of the first electrode plates 11 is connected to a first end of one of the first inner electrode tabs 31, the connection points where the first electrode plates 11 are connected to the first inner electrode tabs 31 are distributed in the same semicircle of the winding structure; and each half-circle of the second electrode plate 12 is connected to a first end of one of the second inner electrode tab 32, and the two connection points where the second electrode plate 12 is connected to the second inner electrode tab 32 are distributed in two semicircles of the winding structure, respectively, wherein one semicircle of the winding structure is opposite to the first portion 2111, and the other semicircle of the winding structure is opposite to the second portion 2112. Here, the connection point where each of first inner electrode tabs 31 is connected to the first outer electrode tab 41s corresponds the second portion 2112. Here, the connection point where each of the second inner electrode tabs 32 is connected to the second outer electrode tab 42s corresponds to the second portion 2112.

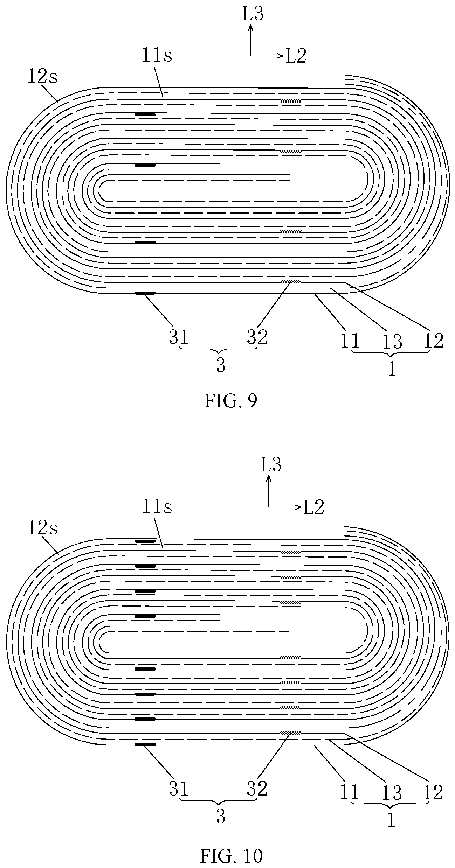

Referring to FIG. 9 for the above-described inner electrode tab 3, outer electrode tab 4 and electrode assembly 1 of the winding structure, in some embodiments, they form a half-entire electrode tab structure, one way of realizing which is the following: each circle of the first electrode plate 11 is connected to a first end of one of the first inner electrode tabs 31, the connection point where the first electrode plates 11 are connected to the first inner electrode tabs 31 are distributed in two semicircles of the winding structure; each circle of the second electrode plate 12 is connected to a first end of one of the second inner electrode tabs 32, and the connection points where the second electrode plates 12 are connected to the second inner electrode tabs 32 are distributed in two semicircles of the winding structure. Here, one semicircle of the winding structure is opposite to the first portion 2111, and the other semicircle of the winding structure is opposite to the second portion 2112. Here, the connection point where each of the first inner electrode tabs 31 is connected to the first outer electrode tab 41s corresponds to the second portion 2112. Here, the connection point where each of the second inner electrode tabs 32 is connected to the second outer electrode tab 42s corresponds to the second portion 2112.

As a note, in the half-entire electrode tab structure, the difference h0 between the second height h2 from the second portion 2112 to the bottom wall 212 of the main body 21 and the first height h1 from the first portion 2111 to the bottom wall 212 of the main body 21 is 0.2 mm to 0.8 mm.

In some embodiments, in the semi-entire electrode tab structure, the difference h0 between the second height h2 from the second portion 2112 to the bottom wall 212 of the main body 21 and the first height h1 from the first portion 2111 to the bottom wall 212 of the main body 21 is 0.4 mm to 0.6 mm.

Preferably, in the semi-entire electrode tab structure, the difference h0 between the second height h2 from the second portion 2112 to the bottom wall 212 of the main body 21 and the first height h1 from the first portion 2111 to the bottom wall 212 of the main body 21 is 0.5 mm.

Understandably, in the half-full electrode tab structure, due to the distribution of the connection point where the first inner electrode tab 31 is connected to the first electrode plate 11 or the connection point where the second inner electrode tab 32 is connected to the second electrode plate 12 in two semicircles, the receiving space is inevitably occupied which corresponds to the first portion 2111 in the packaging bag 2 when the second end of the first inner electrode tab 31 is connected to the first outer electrode tab 41s, or when the second end of the second inner electrode tab 32 is connected to the second outer electrode tab 42s. Therefore, the difference h0 between the second height h2 and first height h1 is less in the half-full electrode tab structure than in the half electrode tab structure.

Referring to FIG. 10 for the above-described inner electrode tab 3, outer electrode tab 4, and electrode assembly 1 of the winding structure, in some embodiments, they form an entire electrode tab structure in which each half-circle of the first electrode plate 11 is connected to a first end of one of the first inner electrode tabs 31, and the two connecting points where the first electrode plates 11 are connected to the first inner electrode tabs 31 are distributed within two semicircles of the winding structure, respectively; and each half circle of the second electrode plate 12 is connected to a first end of one of the second inner electrode tabs 32, and the two connection points where the second electrode plates 12 are connected to the second inner electrode tabs 32 are distributed within two semicircles of the winding structure, respectively; wherein one semicircle of the winding structure is opposite to the first portion 2111 and the other semicircle of the winding structure is opposite to the second portion 2112. Here, the connection point where each of the first inner electrode tabs 31 is connected to the first outer electrode tab 41s corresponds to the second portion 2112. Here, the connection point where each of second inner electrode tabs 32 is connected to the second outer electrode tab 42s corresponds to the second portion 2112.

As a note, in the entire electrode tab structure, the difference h0 between the second height h2 from the second portion 2112 to the bottom wall 212 of the main body 21 and the first height h1 from the first portion 2111 to the bottom wall 212 of the main body 21 is 0.2 mm to 0.8 mm.

Preferably, in the full electrode tab structure, the difference h0 between the second height h2 from the second portion 2112 to the bottom wall 212 of the main body 21 and the first height h1 from the first portion 2111 to the bottom wall 212 of the main body 21 is 0.5 mm.

It is worthy of note that for the above-described inner electrode tab 3, outer electrode tab 4, and the electrode assembly 1 of the winding structure, regardless of the structure among them, i.e., regardless of how the inner electrode tab 3 is connected to the electrode assembly 1, as long as the second height h2 corresponding to the second portion 2112 of the packaging bag 2 is smaller than the first height h1 corresponding to the first portion 2111 h1, an external electrical device may use the space 2a left between the second portion 2112 and the first portion 2111 outside of the packaging bag 2, thereby expanding the application range of the cell 100.

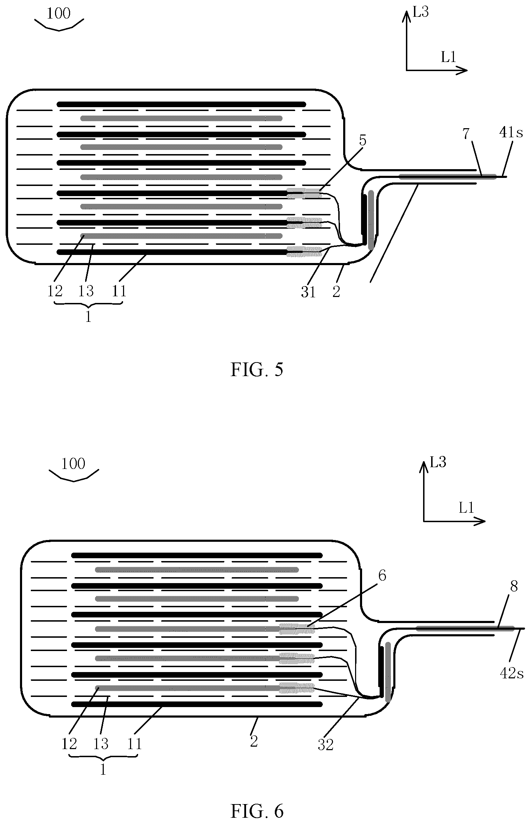

For the above-described inner electrode tabs 3, in some embodiments, the inner electrode tabs 3 include a plurality of first inner electrode tabs 31 and a plurality of second inner electrode tabs 32. In order to prevent short circuit since the first electrode plate 11 is in contact with the second electrode plate 12 at the connection point of the first inner electrode tabs 31 and first electrode plate 11, or at the connection point of the second inner electrode tabs 32 and the second electrode plate 12, referring to FIGS. 5 and 6, the cell 100 further includes a plurality of first insulating tapes 5 and a plurality of second insulating tapes 6. Two ends of one of the first insulating tapes 5 are attached to one surface of a first end of one of the first inner electrode tabs 31 and a surface of a material layer of the first electrode plate 11, respectively; and/or, two ends of one of the second insulating tape 6 are attached to one surface of a first end of one of the second inner electrode tabs 32, and a surface of a material layer of the second electrode plate 12, respectively.

Here, one surface of the first end of the first inner electrode tab 31 and the surface of the material layer of the first electrode plate 11 are located at the same side of the first electrode plate 11.

Here, the one surface of the first end of the second inner electrode tab 32 and the surface of the material layer of the second polar piece 12 are located at the same side of the second polar piece 12.

For the above-described outer electrode tab 4, in some embodiments, the outer electrode tab 4 includes a first outer electrode tab 41s and a second outer electrode tab 42s, wherein the first outer electrode tab 41s and the second outer electrode tab 42s both extend out of the packaging bag 2 from the edge sealing portion 22 of the packaging bag 2. In some embodiments, referring to FIGS. 5 and 6, the cell 100 further includes a first polar tape 7 and a second polar tape 8, wherein the first polar tape 7 is used to seal the connection of the first outer electrode tab 41s and the edge sealing portion 22, and the second polar tape 8 is used to seal the connection of the second outer electrode tab 42s and the edge sealing portion 22, so that the electrolyte in the cell 100 is not likely to be leaked from the connection of the first outer electrode tab 41s and packaging bag 2, or from the connection of the second outer electrode tab 42s and packaging bag 2.

For the above-described inner electrode tab 3 and outer electrode tab 4, the second end of the inner electrode tab 3 is bent and then connected to the connection portion 41 of the outer electrode tab 4. In some embodiments, the second end of the inner electrode tab 3 is close to the packaging bag 2, or the connection portion 41 of the outer electrode tab 4 is close to the packaging bag 2. In order to insulate the second end of the inner electrode tab 3 or the connection portion 41 of the outer electrode tab 4 from the packaging bag 2, referring to FIG. 2, a third insulating tape 9 is usually disposed between the second end of the inner electrode tab 3 and the packaging bag 2, or between the connection portion 41 of the outer electrode tab 4 and the packaging bag 2. When the second end of the inner electrode tab 3 is close to the packaging bag 2, the third insulating tape 9 is adhered to the second end of the inner electrode tab 3 and the packaging bag 2, respectively. When the connection portion 41 of the outer electrode tab 4 is close to the packaging bag 2, the third insulating tape 9 is adhered to the connection portion 41 of the outer electrode tab 4 and the packaging bag 2, respectively.

In an embodiment of the present application, the cell 100 includes the electrode assembly 1, the packaging bag 2, the inner electrode tab 3, and the outer electrode tab 4, the packaging bag 2 includes the main body 21 and the edge sealing portion 22, the electrode assembly 1 is received in the main body 21, the inner electrode tab 3 is connected to the electrode assembly 1 and the outer electrode tab 4, respectively, the edge sealing portion 22 is connected to the top wall 211 of the main body 21, the outer electrode tab 4 extends out of the packaging bag 2 from the edge sealing portion 22, and in the thickness direction L3 of the cell 100, the top wall 211 includes a first portion 2111 and a second portion 2112 disposed at both sides of the edge sealing portion 22, wherein the first height h1 from the first portion 2111 to the bottom wall 212 of the main body 21 is smaller than the second height h2 from the second portion 2112 to the bottom wall 212 of the main body 21. By setting the first height h1 corresponding to the first portion 2111 of the edge sealing portion 22 of the packaging bag 2 smaller than the second height h2 corresponding to the second portion 2111 of the edge sealing portion 22, at least a portion of the inner electrode tab 3, it can be set that the connection of the inner electrode tab 3 and the outer electrode tab 4 corresponds to the second portion 2111, the cell 100 has a small overall size, and an external electrical device may use the space left between the second portion 2111 and the first portion 2111 outside of the packaging bag 2 of the cell 100 2a, so as to reduce the overall size of the electrical device, thereby expanding the application range of the cell 100.

Embodiments of the present application also provide an embodiment of an electrical device including a load and the above-described cell 100. The cell 100 is connected to the load, and the cell 100 is used to supply power to the load.

The electrical device may be an energy storage product, a cell phone, a tablet, a camera drone, an electrical vehicle with one or more than two wheels, or an electrical cleaning tool.

For example, for the camera drone described above, the battery pack is mounted in the camera drone, and the battery pack is used to power loads on the camera drone including a flight system, a control system, a camera system, etc.

As a note, preferred embodiments of the present application are provided by the description and figures of the present application. However, the present application may be realized in many different forms and is not limited to the embodiments described herein. The embodiments are provided for more comprehensive understanding of the disclosure of the present application without additional limitations on the application. Moreover, various embodiments not enumerated above which are formed by further combining the above technical features are within the scope of the description of the present application. Furthermore, improvements or transformations which may be made by a person of ordinary skill in the art according to the description shall fall within the scope of protection of the appended claims of the application.

## Claims

1. A cell comprising an electrode assembly, a packaging bag, an inner electrode tab, and an outer electrode tab, the packaging bag comprising a main body and an edge sealing portion, the electrode assembly and the inner electrode tab being received in the main body, a first end of the inner electrode tab being connected to the electrode assembly, and a second end of the inner electrode tab being connected to one end of the outer electrode tab, wherein
the edge sealing portion is connected to a top wall of the main body, the other end of the outer electrode tab extends out of the packaging bag from the edge sealing portion, and the top wall comprises a first portion and a second portion disposed at both sides of the edge sealing portion in the thickness direction of the cell, wherein a first height from the first portion to the bottom wall of the main body is less than a second height from the second portion to the bottom wall of the main body.

2. The cell according to claim 1, wherein
the outer electrode tab comprises a connection portion and a protrusion portion bent from the connection portion to extend out of the edge sealing portion, the connection portion corresponds to the second portion, the second end of the inner electrode tab is extended toward the second portion and is bent in the direction of the first portion in proximity to the second portion, and the second end of the inner electrode tab is connected to the connection portion after bending.

3. The cell according to claim 2, wherein
the electrode assembly comprises first electrode plates, second electrode plates, and separators, the separators are located between the first electrode plates and the second electrode plates, and the first electrode plates, separators, and second electrode plates are wound together to form a winding structure;
the inner electrode tab comprises a plurality of first inner electrode tabs, and a plurality of second inner electrode tabs, and the outer electrode tab comprises a first outer electrode tab and a second outer electrode tab;
first ends of the plurality of first inner electrode tabs are connected to the first electrode plates, and second ends of the plurality of first inner electrode tabs are connected to the first outer electrode tab; and
first ends of the plurality of second inner electrode tabs are connected to the second electrode plates, second ends of the plurality of second inner electrode tabs are connected to the second outer electrode tab, and the second outer electrode tab extends out of the packaging bag from the edge sealing portion.

4. The cell according to claim 3, wherein
each circle of the first electrode plates is connected to a first end of one of the first inner electrode tabs, the connection points where the first electrode plates are connected to each of the first inner electrode tabs are in the same semicircle of the winding structure, and the connection points where the first electrode plates are connected to each of the first inner electrode tabs correspond to the second portion;
and/or
each circle of the second electrode plates is connected to a first end of one of the second inner electrode tabs, the connection points where the second electrode plates are connected to each of the second inner electrode tabs are in the same semicircle of the winding structure, and the connection points where the second electrode plates are connected to each of the second inner electrode tabs correspond to the second portion.

5. The cell according to claim 4, wherein
the difference between the second height and the first height is 0.6 mm to 1.2 mm.

6. The cell according to claim 3, wherein
each half-circle of the first electrode plate is connected to the first end of one of the first inner electrode tabs, and the two connection points where each circle of the first electrode plates is connected to the first inner electrode tab are distributed in two semicircles of the winding structure, respectively, wherein one semicircle of the winding structure is opposite to the first portion, and the other semicircle of the winding structure is opposite to the second portion; and
each circle of the second electrode plate is connected to the first end of one of the second inner electrode tabs, and the connection points where the second electrode plate is connected to each of the second inner electrode tabs are distributed within the same semicircle of the winding structure.

7. The cell according to claim 3, wherein
each half-circle of the first electrode plate is connected to the first end of one of the first inner electrode tabs, and the two connection points where each circle of the first electrode plate is connected to the first inner electrode tab are distributed within two semicircles of the winding structure, respectively; and
each half-circle of the second electrode plate is connected to the first end of one of the second inner electrode tabs, and the two connection points where each circle of the second electrode plate is connected to the second inner electrode tab are distributed within two semicircles of the winding structure, respectively;
wherein one semicircle of the winding structure is opposite to the first portion, and the other semicircle of the winding structure is opposite to the second portion.

8. The cell according to claim 6 or 7, wherein
the difference between the second height and the first height is 0.2 mm to 0.8 mm.

9. The cell according to any one of claims 3-7, wherein the cell further comprises a plurality of first insulating tapes and a plurality of second insulating tapes, wherein
two ends of one of the first insulating tapes are attached to one surface of the first end of one of the first inner electrode tabs and a surface of a material layer of the first electrode plate, respectively;
and/or.
two ends of one of the second insulating tapes are attached to one surface of the first end of one of the second inner electrode tabs and a surface of a material layer of the second electrode plate, respectively.

10. The cell according to any one of claims 3-7, wherein it further comprises a first electrode tab tape and a second electrode tab tape, wherein
the first electrode tab tape is used to seal a connection of the first outer electrode tab and edge sealing portion, and the second electrode tab tape is used to seal a connection of the second outer electrode tab and edge sealing portion.

11. An electrical device, comprising a load and a cell according to any one of claims 1-10, the load and the cell being electrically connected.
